(19) Europäisches Patentamt
European Patent Office
Office européen des brevets

(11) EP 0 336 128 B2

(12) **NEUE EUROPÄISCHE PATENTSCHRIFT**

(45) Veröffentlichungstag und Bekanntmachung des Hinweises auf die Entscheidung über den Einspruch:
**18.11.1998 Patentblatt 1998/47**

(51) Int Cl.⁶: **C08F 10/00**, C08F 4/642

(45) Hinweis auf die Patenterteilung:
**27.01.1993 Patentblatt 1993/04**

(21) Anmeldenummer: **89103942.2**

(22) Anmeldetag: **07.03.1989**

(54) **Verfahren zur Herstellung eines 1-Olefinpolymers**

Process for preparing an alpha-olefin polymer

Procédé de préparation d'un polymère d'alpha-oléfine

(84) Benannte Vertragsstaaten:
**BE DE ES FR GB IT NL**

(30) Priorität: **12.03.1988 DE 3808268**

(43) Veröffentlichungstag der Anmeldung:
**11.10.1989 Patentblatt 1989/41**

(73) Patentinhaber: **TARGOR GmbH**
**55116 Mainz (DE)**

(72) Erfinder:
- **Winter, Andreas, Dr.**
  **D-6233 Kelkheim (Taunus) (DE)**
- **Dolle, Volker, Dr.**
  **D-6233 Kelkheim (Taunus) (DE)**
- **Rohrmann, Jürgen, Dr.**
  **D-8056 Neufahrn (DE)**
- **Spaleck, Walter, Dr.**
  **D-6237 Liederbach (DE)**

(56) Entgegenhaltungen:
**EP-A- 302 424**
**EP-A- 320 762**
**EP-A- 0 129 368**
**EP-A- 0 260 999**
**EP-A- 0 284 708**

- **Proceedings of an International Symposium, Hamburg, September 21-24, 1987, W. Kaminsky "Transition Metals and Organometallics as Catalysts for Olefin Piolymerization".**

Bemerkungen:
Die Akte enthält technische Angaben, die nach dem Eingang der Anmeldung eingereicht wurden und die nicht in dieser Patentschrift enthalten sind.

EP 0 336 128 B2

**Beschreibung**

Die Erfindung bezieht sich auf ein Verfahren zur Herstellung von 1-Olefinpolymeren mit hoher Isotaktizität, enger Molmassenverteilung, hoher Molmasse und exzellenter Kornmorphologie.

Aus der Literatur sind lösliche Metallocenverbindungen auf Basis von Bis(cyclopentadienyl)zirkon-alkyl bzw. -halogenid in Kombination mit oligomeren Aluminoxanen bekannt.

Mit diesen Systemen können Ethylen und Propylen mit mäßiger Aktivität polymerisiert werden, man erhält jedoch kein isotaktisches Polypropylen.

Weiterhin ist von dem Katalysatorsystem Bis(cyclopentadienyl)titandiphenyl/Methylaluminoxan bekannt, daß es Propylen in Stereoblockpolymere, d.h. Polypropylen mit mehr oder weniger langen isotaktischen Sequenzen, umzuwandeln vermag (vgl. US-PS 4,522,982). Deutliche Nachteile dieses Katalysatorsystems sind die großtechnisch irrelevanten Polymerisationstemperaturen (0 °C bis -60 °C) und die völlig unbefriedigenden Katalysatoraktivitäten.

Die Herstellung von isotaktischem Polypropylen gelingt mit Hilfe des Ethylen-bis(4,5,6,7-tetrahydro-1-indenyl)zirkondichlorids zusammen mit einem Aluminoxan in einer Suspensionspolymerisation (vgl. EP-A 185 918).

Das Polymer besitzt eine enge Molmassenverteilung, was für bestimmte Anwendungen, beispielsweise für den Hochleistungsspritzguß, von Vorteil ist.

Gleichzeitig besitzt das Katalysatorsystem eine Reihe von Mängeln.

Die Polymerisation wird in Toluol durchgeführt, welches sehr aufwendig gereinigt und von Feuchtigkeit und Sauerstoff befreit werden muß. Außerdem ist die Schüttdichte des Polymers zu gering, die Kornmorphologie und die Korngrößenverteilung unbefriedigend.

Besonderer Nachteil des bekannten Verfahrens ist jedoch, daß bei technisch interessanten Polymerisationstemperaturen nur Polymere mit unakzeptabel niedriger Molmasse hergestellt werden können.

Es wurde auch eine spezielle Voraktivierungsmethode des Metallocens mit einem Aluminoxan vorgeschlagen, welche zu einer beachtlichen Steigerung der Aktivität des Katalysatorsystems und zu einer deutlichen Verbesserung der Kornmorphologie des Polymeren führt (vgl. DE 37 26 067). Die Voraktivierung erhöht zwar die Molmasse, jedoch ist keine wesentliche Steigerung erreichbar.

Weiterhin sind Katalysatoren auf Basis Ethylenbisindenylhafniumdichlorid und Ethylen-bis(4,5,6,7-tetrahydro-1-indenyl)hafniumdichlorid und Methylaluminoxan bekannt, mit denen durch Suspensionspolymerisation höhermolekulare Polypropylene hergestellt werden können (vgl. J. A. Ewen et al., J. Am.Chem.Soc. 109 (1987) 6544). Unter technisch relevanten Polymerisationsbedingungen ist jedoch die Kornmorphologie der derart erzeugten Polymeren nicht befriedigend und die Aktivität der eingesetzten Katalysatoren vergleichsweise gering.

Es bestand die Aufgabe, einen Katalysator zu finden, der Polymere mit verbesserter Kornmorphologie und hoher Molmasse in großer Ausbeute erzeugt.

Es wurde gefunden, daß unter Verwendung von bestimmten heteroatomverbrückten Metallocensystemen die Aufgabe gelöst werden kann.

Die Erfindung betrifft somit ein Verfahren zur Herstellung eines 1-Olefinpolymers durch Polymerisation eines 1-Olefins der Formel $R\text{-}CH{=}CH_2$, worin R eine Alkylgruppe mit 1 bis 28 C-Atomen ist, oder Copolymerisation dieser Olefine untereinander oder mit Ethylen,bei einer Temperatur von -60 bis 200 °C, bei einem Druck von 0,5 bis 60 bar, in Lösung, in Suspension oder in der Gasphase, in Gegenwart eines Katalysators, welcher aus einem Metallocen als Übergangsmetallverbindung und einem Aluminoxan der Formel (II)

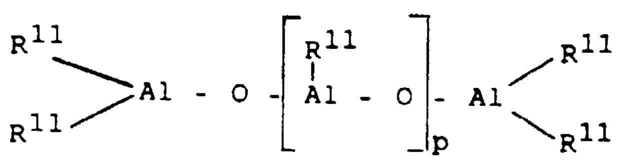
(II)

für den linearen Typ und/oder der Formel (III)

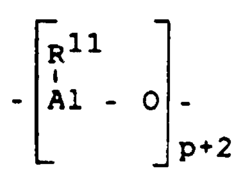
(III)

für den cyclischen Typ, wobei in den Formeln (II) und (III) $R^{11}$ eine $C_1$-$C_6$Alkylgruppe bedeutet und p eine ganze Zahl

von 2 bis 50 ist, besteht, dadurch gekennzeichnet, daß die Polymerisation in Gegenwart eines Katalysators durchgeführt wird, dessen Übergangsmetallkomponente eine Verbindung ist der Formel (I)

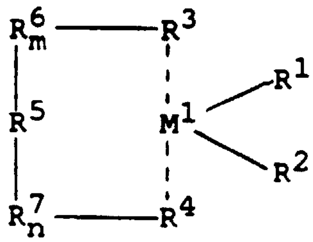

(I)

worin $M^1$ Zirkon ist,

$R^1$ und $R^2$ gleich oder verschieden sind und ein Wasserstoffatom, ein Halogenatom, eine $C_1$-$C_{10}$-Alkylgruppe, eine $C_6$-$C_{10}$-Arylgruppe, eine $C_2$-$C_{10}$Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten,
$R^3$ und $R^4$ gleich oder verschieden sind und einen ein- oder mehrkernigen Kohlenwasserstoffrest, welcher mit dem Zentralatom eine Sandwichstruktur bilden kann, bedeuten,
$R^5$

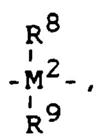 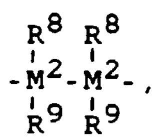 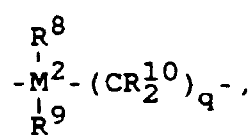 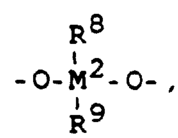

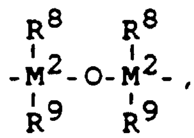 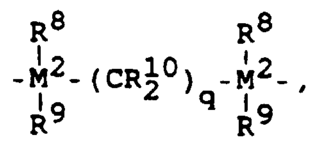 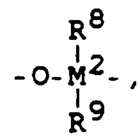

$=BR^8$, $=AlR^8$, -Ge-, -Sn-, -O-, -S-, =S=O, $=SO_2$, $=NR^8$, $=PR^8$ oder $=P(O)R^8$ bedeutet, wobei
$R^8$, $R^9$ und $R^{10}$ gleich oder verschieden sind und ein Wasserstoffatom, ein Halogenatom, eine $C_1$-$C_{10}$-Alkylgruppe, eine $C_6$-$C_{10}$-Arylgruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder
$R^8$ und $R^9$ oder $R^8$ und $R^{10}$ jeweils zusammen mit den sie verbindenden Atomen einen Ring bilden,
$M^2$ Silizium, Germanium oder Zinn und q 1, 2 oder 3 bedeuten, $R^6$ und $R^7$ gleich oder verschieden sind und eine Gruppe $=CR^8R^9$ bedeuten, wobei $R^8$ und $R^9$ die obengenannte Bedeutung haben,
m und n gleich oder verschieden sind und null, 1 oder 2 bedeuten, wobei m+n null, 1 oder 2 ist,

und daß gegebenfalls das Metallboren der Formel (I) vor dem Einsatz in der Polymerisationsreaktions mit einem Amuminoscan der Formel (II) und oder (III) veraktiviert wird.

Für das erfindungsgemäße Verfahren können verschiedene Übergangsmetallkomponenten eingesetzt werden. Diese sind stereorigide, chirale Metallocene der Formel (I)

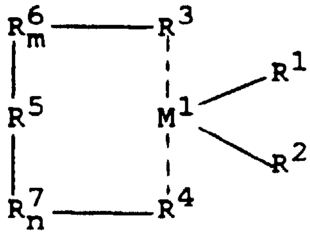 (I)

$M^1$ ist Zirkon.

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_6$-$C_{10}$-, vorzugsweise $C_6$-$C_8$-Arylgruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$- vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.
$R^3$ und $R^4$ sind gleich oder verschieden, vorzugsweise gleich und bedeuten einen ein- oder mehrkernigen Kohlenwasserstoffrest, welcher zusammen mit dem Zentralatom eine Sandwichstruktur bilden kann. Beispiele für derartige Reste sind die Indenyl-, Tetrahydroindenyl- oder Cyclopentadienylgruppe und Heteroaromatenliganden.
$R^5$ ist

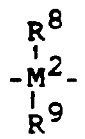, 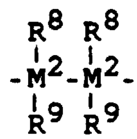, 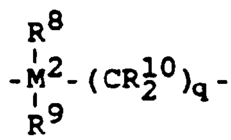, 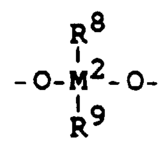,

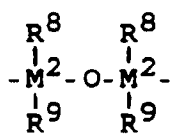, 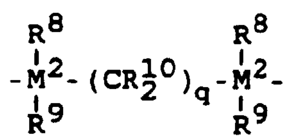, 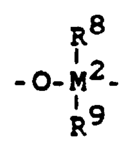,

$=BR^8$, $=AlR^8$, -Ge-, -Sn-, -O-, -S-, =S=O, $=SO_2$, $=NR^8$, $=PR^8$ oder $=P(O)R^8$, wobei $R^8$, $R^9$ und $R^{10}$ gleich oder verschieden sind und
ein Wasserstoffatom ein Halogenatom, vorzugsweise Fluor, eine $C_1$-$C_{10}$-, vorzugsweise $C_1$-$C_4$-Alkylgruppe, eine $C_6$-$C_{10}$-, vorzugsweise $C_6$-$C_8$-Arylgruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_8$-$C_{40}$-, vorzugsweise $C_8$-$C_{12}$-Arylalkenylgruppe oder, eine $C_7$-$C_{40}$-, vorzugsweise $C_7$-$C_{12}$-Alkylarylgruppe, bedeuten oder $R^8$ und $R^9$ oder $R^8$ und $R^{10}$ bilden jeweils zusammen mit den sie verbindenden Atomen einen Ring.
$M^2$ ist Si, Ge oder Sn und q is 1, 2 oder 3,
$R^5$ ist vorzugsweise $=SiR^8R^9$, -S-, =S=O oder $=PR^8$,
$R^6$ und $R^7$ sind gleich oder verschieden und bedeuten eine Gruppe $=CR^8R^9$, worin $R^8$ und $R^9$ die obengenannte Bedeutung haben,
m und n sind gleich oder verschieden und bedeuten null, 1 oder 2, wobei m+n null, 1 oder 2 ist. Vorzugsweise sind m und n null oder 1.

Die optisch aktiven Metallocene werden als Racemat zur Herstellung von hochisotaktischen Poly-1-olefinen eingesetzt. Verwendet werden kann aber auch die reine R- oder S-Form. Mit diesen reinen stereoisomeren Formen Ist optisch aktives Pdymeres herstellbar. Abgetrennt werden muß jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochisotaktisches Polymeres erzeugen kann.
Die Trennung der Stereoisomeren ist im Prinzip bekannt.
Die vorstehend beschriebenen Metallocene können nach folgendem Reaktionsschema hergestellt werden:

$$R^3 + ButylLi \rightarrow R^3Li$$

$$R^4 + ButylLi \rightarrow R^4Li$$

$$\xrightarrow{X-R^6_m-R^5-R^7_n-X} R^3-R^6_m-R^5-R^7_n-R^4$$

(X = Cl, Br, O-Tosyl)

$$R^3-R^6_m-R^5-R^7_n-R^4 + 2\ ButylLi \rightarrow LiR^3-R^6_mR^5-R^7_n-R^4Li$$

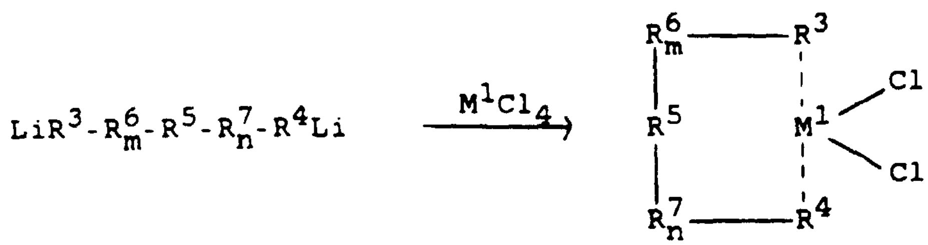


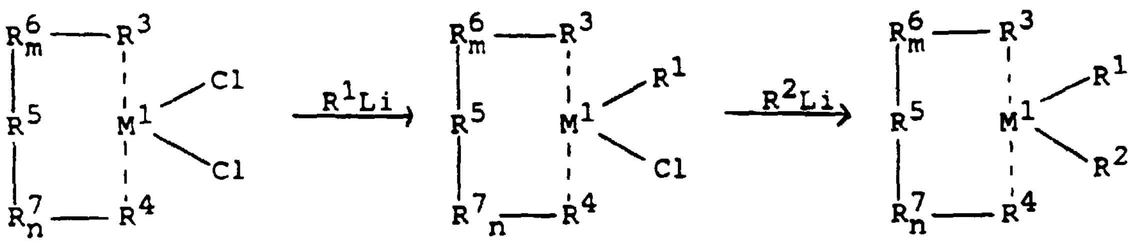


Die besonders bevorzugt eingesetzten Metallocenverbindungen sind rac-Bisindenyl(arylalkylsilyl)zirkondichlorid und rac-Bisindenyl(dialkylsilyl)zirkondichlorid.

Der Aktivator ist ein Aluminoxan der Formel (II)

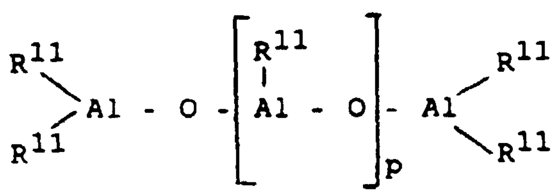 (II)

für den linearen Typ und/oder der Formel (III)

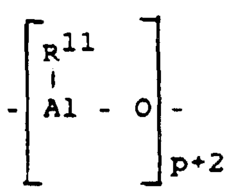 (III)

für den cyclischen Typ. In diesen Formeln bedeuten $R^{11}$ eine $C_1$-$C_6$-Alkylgruppe, vorzugsweise Methyl, Ethyl oder Isobutyl, insbesondere Methyl, und p eine ganze Zahl von 2 bis 50, bevorzugt 15 bis 40.

Das Aluminoxan kann beispielsweise auf verschiedene Art und Weise hergestellt werden.

Bei einem der Verfahren wird fein gepulvertes Kupfersulfatpentahydrat in Toluol aufgeschlämmt und in einem

Glaskolben unter Inertgas bei etwa-20°C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt Anschließend wird das im Toluol gelöste Aluminoxan von dem Kupfersulfat abfiltriert und die Lösung unter Vakuum eingeengt. Es wird angenommen, daß bei diesem Herstellungsverfahren die niedermolekularen Aluminoxane unterAbspaltung von Aluminiumtrialkyl zu höheren Oligomeren kondensieren.

Weiterhin erhält man Aluminoxane, wenn man bei einer Temperatur von -20 bis 100°C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Raktion bringt. Dabei beträgt das Volumenverhältnis zwischen Lösemittel und dem verwendeten Aluminiumalkyl 1:1 bis 50:1 - vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 18H_2O$ und $Al_2(SO_4)_3 \cdot 16H_2O$ mit dem besonders hohen Kristallwassergehalt von 18 bzw. 16 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oderToluol, zu lösen und dann die Aluminiumverbindung mit Wasser umzusetzen.

Neben den zuvor geschilderten Verfahren zur Herstellung von Aluminoxanen gibt es weitere, welche brauchbar sind.

Es wird bevorzugt, das Metallocen vor dem Einsatz in der Polymerisationsreaktion mit einem Aluminoxan der Formel (II) und/oder (III) vorzugaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.

Bevorzugt wird Toluol verwendet

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100 °C, vorzugsweise 0 bis 70°C.

Eine deutliche längere Voraktivierung ist möglich, sie wirkt sich normalerweise jedoch weder aktivitätssteigernd noch aktivitätsmindernd aus, kann jedoch zu Lagerzwecken durchaus sinnvoll ein.

Eine Voraktivierung erhöht die Molmasse des Polymeren praktisch nicht. Vorzugsweise wird das gleiche Aluminoxan zur Voraktivierung und zur Polymerisation verwendet.

Der erfindungsgemäß zu verwendende Katalysator wird zur Polymerisation von 1-Olefinen der Formel $R-CH=CH_2$, in der R einen Alkylrest mit bis 28 C-Atomen, vorzugsweise 1 bis 10 C-Atomen, insbesondere einem C-Atom bedeutet, eingesetzt, beispielsweise Propylen, Buten-(1), Hexen-(1), 4-Methylpenten-(1), Octen-(1). Besonders bevorzugt ist Propylen. Ferner wird der Katalysator auch zur Copolymerisation dieser Olefine untereinander und mit Ethylen eingesetzt, wobei mehr als 50 Gew.-% Ethylen einpolymerisiert werden können.

Die Polymerisation wird in bekannter Weise in Lösung, in Suspension oder in der Gasphase, kontinuierlich oder diskontinuierlich, ein- oder mehrstufig bei einer Temperatur von -60 bis 200°C, vorzugsweise -20 bis 120, insbesondere 0 bis 80°C, durchgeführt. Der Druck beträgt 0,5 bis 60 bar. Bevorzugt ist die Polymerisation in dem technisch besonders interessanten Druckbereich von 5 bis 60 bar.

Dabei wird die Metallocenverbindung in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-4}$ bis $10^{-1}$ mol, vorzugsweise $10^{-3}$ bis $10^{-2}$ mol pro $dm^3$ Lösemittel bzw. pro dm3 Reaktorvolumen verwendet. Prinzipiell sind aber auch höhere Konzentrationen möglich.

Es ist vorteilhaft, das Aluminoxan vor Zugabe des Metallocens in das Polymerisationssystem erst einige Minuten zusammen mit der Polymerisationsflüssigphase zu rühren. Die Rührzeit beträgt vorzugsweise 10 bis 30 Minuten. Es kann jedoch ohne größere Einbußen auch kürzere Zeit gerührt werden, eine längere Rührzeit hat auf das Ergebnis der Polymerisation keine nennenswerte Wirkung.

Die Polymerisation wird in einem für das Ziegler-Niederdruckverfahren gebräuchlichen inerten Lösemittel durchgeführt. Beispielsweise in einem aliphatischen oder cycloaliphatischen Kohlenwasserstoff; als solcher sei beispielsweise Butan, Pentan, Hexan, Heptan, Isooctan, Cydohexan, Methylcydohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol. Bevorzugt wird das zu polymerisierende Monomere als Lösemittel oder

Suspensionsmittel eingesetzt. Die Molmasse des Polymerisats kann in bekannter Weise geregelt werden; vorzugsweise wird dazu Wasserstoff verwendet. Die Dauer der Polymerisation ist beliebig, da das erfindungsgemäß zu verwendende Katalysatorsystem einen nur geringen zeitabhängigen Abfall der Polymerisationsaktivität zeigt.

Mittels des erfindungsgemäßen Verfahrens können Polymerpulver hergestellt werden, die aus kompakten kugelförmigen Teilchen mit einer sehr engen Korngrößenverteilung und einer hohen Schüttdichte bestehen. Das Polymerpulver zeichnet sich durch eine sehr gute Rieselfähigkeit aus.

Das Polymere weist eine hohe Molmasse, eine sehr enge Molmassenverteilung und eine hohe Isotaktizität auf.

Durch die Verwendung heteroatomverbrückter Metallocene werden Polymere mit höherer Molmasse gebildet als bei Verwendung von Metallocenen, die nur eine Kohlenwasserstoffbrücke enthalten.

Die nachfolgenden Beispiele sollen die Erfindung erläutern.

Es bedeuten

VZ = Viskositätszahl in $cm^3/g$,
$M_w$ = Molmassengewichtsmittel in g/mol,
$M_w/M_n$ = Molmassenverteilung ermittelt durch Gelpermeationschromatographie (GPC) und
II = Isotaktischer Index, bestimmt durch $^{13}C$-NMR-Spektroskopie

**Beispiel 1**

Ein trockener 16 $dm^3$-Kessel wurde mit Stickstoff gespült und mit 10 $dm^3$ flüssigem Propylen befüllt Dann wurden 50 $cm^3$ toluolische Methylaluminoxanlösung (entsprechend 68 mmd Al, mittlerer Oligomerisierungsgrad n = 23) zugegeben und der Ansatz bei 30 °C 15 Minuten gerührt.

Parallel dazu wurden 14,3 mg (0,028 mmol) rac-Bisindenyl(phenylmethylsilyl)zirkondichlorid in 25 $cm^3$ toluolischer Methylaluminoxanlösung (34 mmol Al) gelöst und durch 15 minütiges Stehenlassen voraktiviert. Die Lösung wurde dann in den Kessel gegeben. Das Polymerisationssystem wurde auf eine Temperatur von 70 °C gebracht und 2 h bei dieser Temperatur gehalten.

Es wurden 2,21 kg Polypropylen erhalten.

Die Aktivität des Metallocens betrug somit 77,4 kg PP/g Metallocen x h.

VZ = 50,2 $cm^3/g$, $M_w$ = 42600, $M_w/M_n$ = 2,3, II = 94 %, SD = 449 g/l, Finesgehalt Pulver <100 µm: 0,6 %. Das Polymerprodukt fiel in Form großer kugelförmiger Partikel mit enger Korngrößenverteilung an. Korngrößenverteilung im Polymeren:

| Siebboden [µm] | Anteil [%] | Summe [%] |
|---|---|---|
| <100 | 0,6 | 0,6 |
| 100-200 | 1,2 | 1,8 |
| 200-300 | 0,8 | 2,6 |
| 300-400 | 1,9 | 4,5 |
| 400-500 | 2,5 | 7,0 |
| 500-630 | 4,4 | 11,4 |
| 630-800 | 5,7 | 17,1 |
| 800-1000 | 43,3 | 60,4 |
| 1000-1250 | 19,6 | 80,0 |
| 1250-2000 | 15,2 | 95,2 |
| 2000-2500 | 3,9 | 99,1 |
| >2500 | 0,9 | 100,0 |

$d_{50}$=1000 µm, $S = \ln \frac{d_{50}}{d_{16}} = 0{,}33$.

**Vergleichsbeispiele a und B**

In einem zu Beispiel 1 analogen Versuch wurde mit rac-Bisindenyl(dimethylsilyl)zirkondichlorid als Katalysator ein Polymer mit einer VZ von 45,8 $cm^3/g$, einem $M_w$ von 36375 und einem $M_w/M_n$ von 2,4 erhalten. Entsprechend wurden mit rac-Ethylenbisindenylzirkondichlorid nur folgende Werte erreicht VZ = 32,5 $cm^3/g$, $M_w$ = 20700, $M_w/M_n$ = 2,1.

**Beispiel 2**

Es wurde analog zu Beispiel 1 verfahren, jedoch wurden 30,9 mg (0,06 mmol) rac-Bisindenyl(phenylmethylsilyl) zirkondichlorid verwendet, die Polymerisationszeit betrug 1 h, die Polymerisationstemperatur 65 °C. Es wurden 2,13 kg Polypropylen erhalten.
Die Aktivität des Metallocens betrug 69,0 kg PP/g Metallocen x h.
VZ = 54,2 $cm^3$/g, $M_w$ = 47150, $M_w/M_n$ = 2,1, II = 94,5 %, SD = 523 g/l.

**Beispiel 3**

Es wurde analog zu Beispiel 1 verfahren, jedoch wurden 39,3 mg (0,077 mmol) rac-Bisindenyl(phenylmethylsilyl) zirkondichlorid verwendet, die Polymerisationszeit betrug 1 h, die Polymerisationstemperatur 60 °C. 1,50 kg Polypropylen wurden erhalten. Die Aktivität des Metallocens betrug somit 38,2 kg PP/g Metallocen x h.
VZ = 60,8 $cm^3$/g, $M_w$ = 56100, $M_w/M_n$ = 2,2, II = 95,4 %, SD = 487 g/l, kein Feinkorn <50 µm.

**Beispiel 4**

Es wurde analog zu Beispiel 1 verfahren, jedoch wurden 28,3 mg (0,055 mmd) rac-Bisindenyl(phenylmethylsilyl) zirkondichlorid verwendet. Die Polymerisationszeit betrug 3 h, die Polymerisationstemperatur 60 °C. 2,96 kg Polypropylen wurden erhalten.
Die Aktivität des Metallocens betrug somit 34,9 kg PP/g Metallocen x h.
VZ = 59,5 $cm^3$/g, $M_w$ = 54100, $M_w/M_n$ = 2,4, II = 94,6 %, SD = 407 g/l, Finesgehalt Pulver <100 µm: 0,3 %.
Das Polymerprodukt fiel in Form kugelförmiger Partikel mit enger Korngrößenverteilung an. Korngrößenverteilung im Polymeren:

| Siebboden [µm] | Anteil [%] | Summe [%] |
|---|---|---|
| <100 | 0,3 | 0,3 |
| 100-200 | 22,4 | 22,7 |
| 200-300 | 71,9 | 94,6 |
| 300-400 | 2,6 | 97,2 |
| 400-500 | 0,3 | 97,5 |
| >500 | 2,5 | 100,0 |

$d_{50}$ = 250 µm, $S = \ln\frac{d_{50}}{d_{16}} = 0{,}27$

**Vergleichsbeispiele C und D**

Zu einem zu Beispiel 3 analogen Versuch wurde mit rac-Bisindenyl(dimethylsilyl)zirkondichlorid eine VZ von 50,8 $cm^3$/g, ein $M_w$ von 44900 und ein $M_w/M_n$ von 2,2·erhalten. Entsprechend wurden mit rac-Ethylenbisindenylzirkondichlorid nur folgende Werte erreicht:
VZ = 39,5 $cm^3$/g, $M_w$ = 27600, $M_w/M_n$ = 2,2.

**Beispiel 5**

Es wurde analog zu Beispiel 1 verfahren, jedoch wurden 54,1 mg (0,106 mmol) rac-Bisindenyl(phenylmethylsilyl) zirkondichlorid eingesetzt. Weiterhin wurde 1 h 20 min bei 50 °C polymerisiert.
1,59 kg Polypropylen wurden erhalten.
Die Aktivität des Metallocens betrug somit 22,0 kg PP/g Metallocen x h.
VZ = 65,3 $cm^3$/g, $M_w$ = 61250, $M_w/M_n$ = 2,4.

**Vergleichsbeispiele E und F**

In einem zu Beispiel 5 analogen Versuch wurde mit rac-Bisindenyl(dimethylsilyl)zirkondichlorid ein Polymer mit einer VZ von 58,9 $cm^3$/g, einem $M_w$ von 54450 und einem $M_w/M_n$ von 2,6 erhalten. Entsprechend wurden mit rac-Ethylenbisindenylzirkondichlorid nur folgende Werte erreicht
VZ = 43,2 $cm^3$/g, $M_w$ = 36100, $M_w/M_n$ = 2,4.

**Beispiel 6**

Es wurde analog zu Beispiel 1 verfahren, jedoch wurden 51,3 mg (0,10 mmol) rac-Bisindenyl(phenylmethylsilyl) zirkondichlorid eingesetzt.
Polymerisiert wurde 3 h bei 30 °C.
690 g Polypropylen wurden erhalten.
Die Aktivität des Metallocens betrug somit 4,5 kg PP/g Metallocen x h.
VZ = 92,9 $cm^3/g$, $M_w$ = 95850, $M_w/M_n$ = 2,1.

**Vergleichsbeispiele G und H**

In einem zu Beispiel 6 analogen Versuch wurde mit rac-Bisindenyl(dimethylsilyl)zirkondichlorid ein Polymer mit einer VZ von 77,2 $cm^3/g$, einem $M_w$ von 76500 und einem $M_w/M_n$ von 2,5 erhalten. Entsprechend wurden mit rac-Ethylenbisindenylzirkondichlorid nur folgende Werte erreicht
VZ = 54,7 $cm^3/g$, $M_w$ = 49800, $M_w/M_n$ = 2,3.

**Beispiel 7**

Ein trockener 16 $dm^3$-Kessel wurde mit Stickstoff gespült und mit 10 $dm^3$ flüssigem Propylen befüllt. Dann wurden 50 $cm^3$ toluolische Methylaluminoxanlösung (entsprechend 68 mmol Al, mittlerer Oligomerisierungsgrad n = 23) zugegeben und der Ansatz bei 30°C 15 Minuten gerührt. Parallel dazu wurden 47,9 mg (0,084 mmol) rac. Bisindenyl (diphenylsilyl) $ZrCl_2$ in 25 $cm^3$ toluolischer Methylaluminoxanlösung (34 mmol Al) gelöst und durch 15-minütiges Stehemlassen voraktiviert Die tiefrote Lösung wurde dann in den Kessel gegebn.
Die Polymerisationssystem wurde auf eine Temperatur von 60°C gebracht und 1 Stde. bei dieser Temperatur gehalten.
Ausbeute 2,56 kg PP.
Die Aktivität betrug somit53,4 kg PP/g Metallocen Stunde.
VZ = 57,4 $cm^3/g$, $M_w$ = 45500, $M_w/M_n$ = 2,1, II = 97 %, SD = 330 g/l.

**Beispiel 8**

Ein trockener 16-$dm^3$-Kessel wurde mit Stickstoff gespült und mit 10 $dm^3$ flüssigem Propylen befüllt. Dann wurden 29,4 $cm^3$ toluolische Methylaluminoxanlösung (entsprechend 40 mmol Al, mittlerer Oligomerisierungsgrad n=23) gerührt. Parallel dazu wurden 13,8 mg (0,026mmol) rac-Bisindenyl (phenylvinylsilyl) $ZrCl_2$ in 14,7 $cm^3$ toluolischer Methylaluminoxanlösung (20 mmol Al) gelöst und nach 15 minütigem Stehenlassen in den Polymerisationskessel gegeben.
Bei 70°C wurde 2 Stdn. polymerisiert und 1,33 kg Polypropylen erhalten. Die Aktivität des Metallocens betrug 48,2 kg PP/g Metallocen Stunde.
VZ = 49.0, Mw = 32 600, $M_w/M_n$ = 2,9, II = 96 %, SD = 449 g/l

**Beispiel 9**

Es wurde analog zu Beispiel 8 verfahren, jedoch 56 mg (0,107 mmol) rac-Bisindenyl (phenylvinylsilyl) $ZrCl_2$ eingesetzt.Die Polymerisationstemperatur betrug 50°C, die Polymerisationszeit 105 Minuten.
Es wurden 1,39 kg PP erhalten. Die Aktivität betrug somit 14,2 kg PP/g Metallocen · Stunde.
VZ = 66,0 $cm^3/g$, $M_w$ =48 600, $M_w/M_n$ = 2,3.

**Beispiel 10**

Es wurde analog zu Beispiel 8 verfahren, jedoch 10,3 mg (0,021 mmol) rac-Bisindenyl (dimethylgermyl) $ZrCl_2$ eigesetzt Polymerisationstemperatur = 70°C,, Polymerisationszeit 1 Stunde, Ausbeute 2,83 kg PP. Die Aktivität betrug 274,8 kg PP/g Metallocen Stunde.
VZ = 49,0 $cm^3/g$, $M_w$ = 34200, $M_w/M_n$ = 2,2, II = 97,9 %, SD = 417 g/l.

**Beispiel 11**

Es wurde analog Beispiel 10 verfahren, jedoch 15,7 mg (0,032 mmol) des Metallocens verwendet und 2,5 Stdn. bei 60°C polymerisiert. Ausbeute 1,91 kg PP entsp echend einer Aktivität von 48,7 kg PP/g Metallocen : Stde.
VZ = 57,4 $cm^3/g$, $M_w$ = 52100, $M_w/M_n$ = 2,0, II = 98 %, SD = 350 g/l.

## Patentansprüche

1. Verfahren zur Herstellung eines 1-Olefinpolymers durch Polymerisation eines 1-Olefins der Formel $R\text{-}CH{=}CH_2$, worin R eine Alkylgruppe mit 1 bis 28 C-Atomen ist, oder Copolymerisation dieser Olefine untereinander oder mit Ethylen, bei einer Temperatur von -60 bis 200°C, bei einem Druck von 0,5 bis 60 bar, in Lösung, in Suspension oder in der Gasphase, in Gegenwart eines Katalysators, welcher aus einem Metallocen als Übergangsmetallverbindung und einem Aluminoxan der Formel (II)

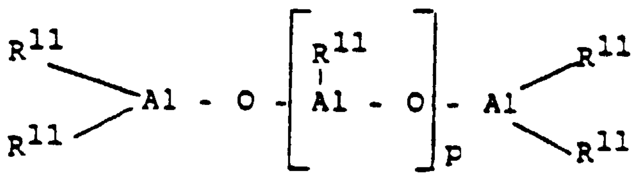

(II)

für den linearen Typ und/oder Formel (III)

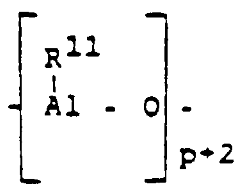

(III)

für den cyclischen Typ, wobei in den Formeln (II) und (III) $R^{11}$ eine $C_1$-$C_6$-Alkylgruppe bedeutet und p eine ganze Zahl von 2 bis 50 ist, besteht, dadurch gekennzeichnet, daß die Polymerisation in Gegenwart eines Katalysators durchgeführt wird, dessen Übergangsmetallkomponente eine stereorigide, chirale Verbindung der Formel (I)

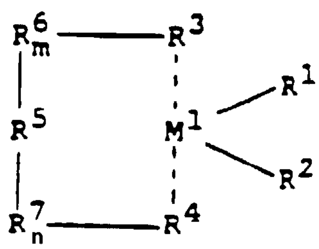

(I)

darstellt, worin $M^1$ Zirkon ist, $R^1$ und $R^2$ gleich oder verschieden sind und ein Wasserstoffatom, ein Halogenatom, eine $C_1$-$C_{10}$-Alkylgruppe, eine $C_6$-$C_{10}$-Arylgruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten, $R^3$ und $R^4$ gleich oder verschieden sind und einen mehrkernigen Kohlenwasserstoffrest, welcher mit dem Zentralatom eine Sandwichstruktur bilden kann, und verschieden von einer Tetrahydroindenylgruppe ist, bedeuten,

$R^5$

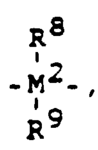 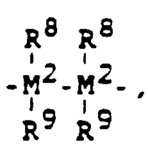 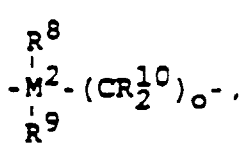 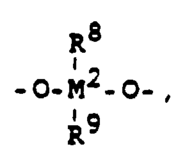

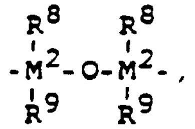 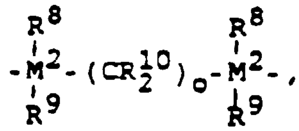 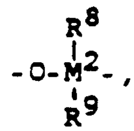

$=BR^8$, $=AlR^8$, -Ge-, -Sn-, -O-, -S-, =S=O, $=SO_2$, $=NR^8$, $=PR^8$ oder $=P(O)R^8$ bedeutet, wobei $R^8$, $R^9$ und $R^{10}$ gleich oder verschieden sind und ein Wasserstoffatom, ein Halogenatom, eine $C_1$-$C_{10}$-Alkylgruppe, eine $C_6$-$C_{10}$-Arylgruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^8$ und $R^9$ oder $R^8$ und $R^{10}$ jeweils zusammen mit den sie verbindenen Atomen einen Ring bilden

$M^2$ Silizium, Germanium oder Zinn und o 1, 2 oder 3 bedeuten,

$R^6$ und $R^7$ gleich oder verschieden sind und eine Gruppe = $CR^8R^9$ bedeuten, wobei $R^8$ und $R^9$ die obengenannte Bedeutung haben, m und n gleich oder verschieden sind und null, 1 oder 2 bedeuten, wobei m + n null, 1 oder 2 ist, wobei die Verbindung der Formel (I) kein rac-Bisindenyl(-dimethylsilyl)zirkondichlorid ist und im Falle einer Massepolymerisation die Verbindung der Formel (I) verschieden ist von Bisindenyl(cyclopropylsilyl)-zirkondichlorid und Bisindenyl(1,1,4,4-tetramethyldisilylethylen)zirkondichlorid.

**2.** Verfahren nach Anspruch 1, dadurch gekennzeichnet, daß die Übergangsmetallkomponente vor der Polymerisation mit einem Aluminoxan der Formel (II) und/oder (III) bei einer Temperatur von -78 bis 100°C 5 Minuten bis 60 Stunden voraktiviert wird.

**3.** Verfahren nach Anspruch 1, dadurch gekennzeichnet, daß die Übergangsmetallkomponente rac-Bisindenyl(arylalkylsilyl)zirkondichlorid oder rac-Bisindenyl(dialkylsilyl)zirkondichlorid und das Aluminoxan ein Methylaluminoxan ist.

**4.** Verfahren nach Anspruch 1, dadurch gekennzeichnet, daß die Übergangsmetallkomponente rac-Bisindenyl(phenylmethylsilyl)zirkondichlorid, rac-Bisindenyl(diphenylsilyl)zirkondichlorid, rac-Bisindenyl(phenylvinylsilyl)zirkondichlorid oder rac-Bisindenyl(dimethylgermyl)zirkondichlorid ist.

**Claims**

**1.** A process for the preparation of a 1-olefin polymer by polymerization of a 1-olefin of the formula $R-CH=CH_2$ in which R is an alkyl group having 1 to 28 carbon atoms, or copolymerization of these olefins with one another or with ethylene at a temperature from -60 to 200°C, at a pressure from 0.5 to 60 bar, in solution, in suspension or in the gas phase, in the presence of a catalyst which consists of a metallocene as transition metal compound and an aluminoxane of the formula (II)

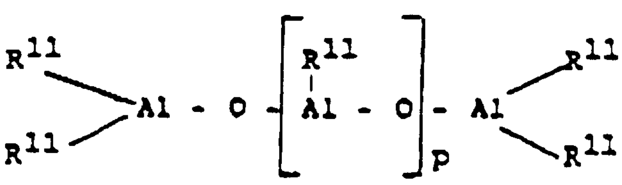 (II)

for the linear type and/or formula (III)

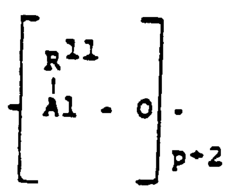 (III)

for the cyclic type, where in the formulae (II) and (III) $R^{11}$ denotes a $C_1$-$C_6$-alkyl group and p is an integer from 2 to 50, which comprises carrying out the polymerization in the presence of a catalyst whose transition metal component is a stereorigid, chiral compound of the formula (I)

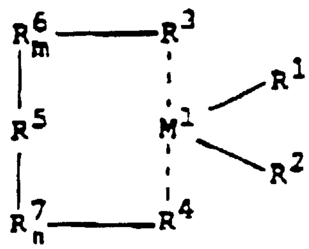

(I)

in which $M^1$ is zirconium, $R^1$ and $R^2$ are identical or different and denote a hydrogen atom, a halogen atom, a $C_1$-$C_{10}$-alkyl group, a $C_6$-$C_{10}$-aryl group, a $C_2$-$C_{10}$-alkenyl group, a $C_7$-$C_{40}$-arylalkyl group, a $C_7$-$C_{40}$-alkylaryl group or a $C_8$-$C_{40}$-arylalkenyl group, $R^3$ and

$R^4$ are identical or different and denote a polynuclear hydrocarbon radical which can form a sandwich structure with the central atom and is different from a tetrahydroindenyl group, $R^5$ denotes

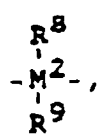, 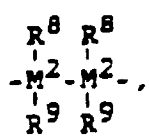, 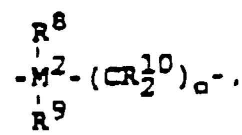, 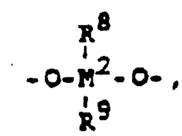,

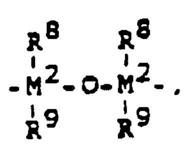, 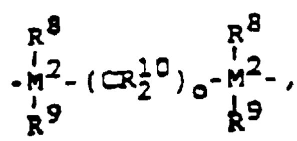, 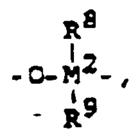,

$=BR^8$, $=AlR^8$, -Ge-, -Sn-, -O-, -S-, =S=O, $=SO_2$, $=NR^8$, $=PR^8$ or $=P(O)R^8$, in which $R^8$, $R^9$ and $R^{10}$ are identical or different and denote a hydrogen atom, a halogen atom, a $C_1$-$C_{10}$-alkyl group, a $C_6$-$C_{10}$-aryl group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group or $R^8$ and $R^9$ or $R^8$ and $R^{10}$ each form a ring together with the atoms linking them,
$M^2$ denotes silicon, germanium or tin and o denotes 1, 2 or 3,
$R^6$ and $R^7$ are identical or different and denote a $=CR^8R^9$ group, in which $R^8$ and $R^9$ have the abovementioned meaning, m and n are identical or different and denote zero, 1 or 2, where m+n is zero, 1 or 2,
where m + n is zero, 1 or 2, where the compound of the formula (I) is not rac-bisindenyl(dimethyl silyl)zirconium dichloride and, in the case of a bulk polymerization, the compound of the formula (I) is different from bisindenyl (cyclopropylsilyl)zirconium dichloride and bisindenyl(1,1,4,4-tetramethyldisilylethylene)zirconium dichloride.

2. The process as claimed in claim 1, wherein the transition metal component is preactivated before the polymerization by an aluminoxane of the formula (II) and/or (III) at a temperature from -78 to 100°C for 5 minutes to 60 hours.

3. The process as claimed in claim 1, wherein the transition metal component is rac-bisindenyl(arylalkylsilyl)zirconium dichloride or rac-bisindenyl(dialkylsilyl)zirconium dichloride and the aluminoxane is a methylaluminoxane.

4. The process as claimed in claim 1, wherein the transition metal component is rac-bisindenyl (phenylmethylsilyl) zirconium dichloride, rac-bisindenyl(diphenylsilyl)zirconium dichloride, rac-bisindenyl(phenylvinylsilyl)zirconium dichloride or rac-bisindenyl(dimethylgermyl)zirconium dichloride.

**Revendications**

1. Procédé de préparation de polymères de 1-oléfines par la polymérisation d'une 1-oléfine de la formule $R\text{-}CH\text{=}CH_2$, dans laquelle R représente" un radical alkyle possédant de 1 à 28 atomes de carbone, ou par la copolymérisation de ses oléfines les unes avec les autres ou avec l'éthylène, à une température qui varie de -60 à 200°C, sous une pression de 0,5 à 60 bars, en solution, en suspension, ou en phase gazeuse, en présence d'un catalyseur constitué d'un métallocène, en tant que composé de métal de transition et d'un aluminoxane de la formule (II)

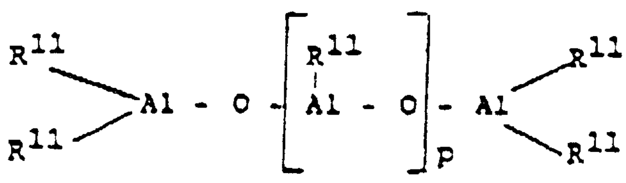
(II)

pour le type linéaire et/ou de la formule (III)

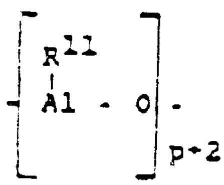
(III)

pour le type cyclique, dans lesquelles formules (II) et (III) $R^{11}$ représente un radical alkyle en $C_1$ à $C_6$ et p représente un nombre entier dont la valeur varie de 2 à 50, caractérisé en ce que l'on entreprend la polymérisation, en présence d'un catalyseur dont le composant à base de métal de transition est un composé stéréorigide et chiral de la formule (I)

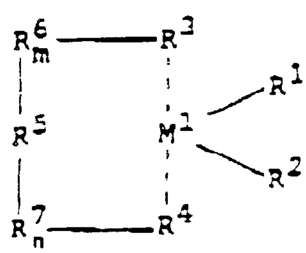
(I)

dans laquelle $M^1$ représente le zirconium, $R^1$ et $R^2$ sont identiques ou différents et représentent chacun un atome d'hydrogène, un atome d'halogène, un radical alkyle en $C_1$ à $C_{10}$, un radical aryle en $C_6$ à $C_{10}$, un radical alcényle en $C_2$ à $C_{10}$, un radical arylalkyle en $C_7$ à $C_{40}$, un radical alkylaryle en $C_7$ à $C_{40}$, ou un radical arylalcényle en $C_8$ à $C_{40}$, $R^3$ et $R^4$ sont identiques ou différents et représentent chacun un reste d'hydrocarbure polynucléaire, qui peut former avec l'atome central une structure en sandwich et qui diffère d'un radical tétrahydroindényle,

$R^5$ représente un radical répondant à l'une des formules suivantes :

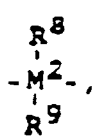
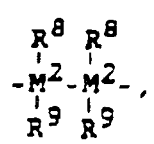
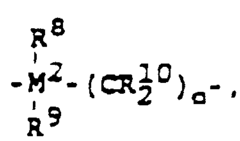
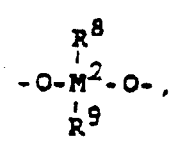

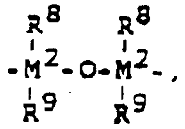

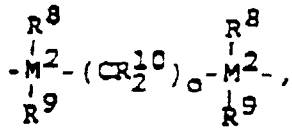

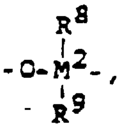

$=BR^8$, $=AlR^8$, -Ge-, -Sn-, -O-, -S-, =S=O, $=SO_2$, $=NR^8$, $=PR^8$ ou $=P(O)R^8$, dans lesquelles $R^8$, $R^9$ et $R^{10}$ sont identiques ou différents et représentent chacun un atome d'hydrogène, un atome d'halogène, un radical alkyle en $C_1$ à $C_{10}$, un radical aryle en $C_6$ à $C_{10}$, un radical alcényle en $C_2$ à $C_{10}$, un radical arylalkyle en $C_7$ à $C_{40}$, un radical arylalcényle en $C_8$ à $C_{40}$, ou un radical alkylaryle en $C_7$ à $C_{40}$, ou bien $R^8$ et $R^9$ ou $R^8$ et $R^{10}$ forment à chaque fois ensemble avec les atomes qui les relient un noyau $M^2$ représente le silicium, le germanium ou l'étain et o est égal à 1, 2 ou 3,

$R^6$ et $R^7$ sont identiques ou différents et représentent un groupe égal $=CR^8R^9$ où $R^8$ et $R^9$ possèdent les significations qui leur ont été précédemment attribuées, m et n sont identiques ou différents et sont égaux à zéro, 1 ou 2, où m + n est égal à zéro, 1 ou 2, où le composé de la formule (I) ne représente pas le dichlorure de rac-bisindényl(diméthylsilyl)zirconium et, dans le cas d'une polymérisation en masse, le composé de la formule (I) diffère du dichlorure de bisindényl(cyclopropylsilyl)zirconium et du dichlorure de 1,1,4,4-tétraméthyldisilyléthylène)zirconium.

**2.** Procédé suivant la revendication 1, caractérisé en ce que le composant à base de métal de transition est préactivé, avant la polymérisation, avec un aluminoxane de la formule (II) et/ou (III) à une température qui varie de -78 à 100°C pendant 5 minutes à 60 secondes.

**3.** Procédé suivant la revendication 1, caractérisé en ce que le composant à base de métal de transition est le dichlorure de rac-bisindényl(arylalkylsilyl)zirconium ou le dichlorure de rac-bisindényl(dialkylsilyl)zirconium et l'aluminoxane est un méthylaluminoxane.

**4.** Procédé suivant la revendication 1, caractérisé en ce que le composant à base de métal de transition est le dichlorure de rac-bisindényl(phénylméthylsilyl)zirconium, le dichlorure de rac-bisindényl(diphénylsilyl)zirconium, le dichlorure de rac-bisindényl(phénylsilyl)zirconium ou le dichlorure de rac-bisindényl(diméthylgermyl)zirconium.